# EUROPEAN PATENT APPLICATION

(11) **EP 4 527 823 A1**
(43) Date of publication of application: **26.03.2025**
(21) Application number: 24199648.7
(22) Date of filing: 11.09.2024
(51) Int. Cl.: C05F 17/00, A43B 1/00, C05F 17/20, C05F 17/80, C05F 17/90, B09B 3/60, B09B 3/65

(54) **SYSTEMS AND METHODS FOR COMPOSTING AN ARTICLE OF FOOTWEAR**

(30) Priority: 21.09.2023 US 202363539755 P
(71) Applicant: PUMA SE, 91074 Herzogenaurach (DE)
(72) Inventor: HARTMANN, Matthias, 91301 Forchheim (DE)
(74) Representative: Gosdin, Carstensen & Partner Patentanwälte Partnerschaftgesellschaft mbB

(57) **Abstract**

A method and system for composting shoes allows shoes to be degraded alongside the composting of compostable material during operation of a single composting vessel. The system includes one or more containers that separate the shoes from the compostable material during operation of the composting vessel. The shoes are subject to multiple runs of the composting vessel. During each run of the composting vessel a new batch of compostable material is composted alongside the shoes.

## Description

### BACKGROUND

The manufacture and disposal of goods in a manner that minimizes environmental impact is becoming an increasing concern. For example, in an effort to provide a more environmentally sustainable product, the footwear industry is increasingly relying on the use of biodegradable materials in the production of shoes. Biodegradable materials are organic materials that can be broken down into harmless substances through normal environmental processes. Thus, the use of biodegradable materials in the construction of shoes may help minimize the waste footprint that would otherwise be created upon the disposal of shoes at the ends of their lifecycles.

However, the rate at which discarded biodegradable materials will degrade is generally dependent upon the environmental conditions to which such materials are subjected to during and after disposal. For example, biodegradable materials that are sent to landfills-and are thus subject to anaerobic conditions upon disposal-may exhibit only minimal amounts of degradation, even years after being discarded. Accordingly, the use of biodegradable materials in the construction of shoes (or other products) may not always be-in and of itself-sufficient to minimize the environmental waste burden created by the disposal of such products.

Composting provides one alternative to the use of landfills for the disposal of discarded biodegradable materials. Composting refers to the controlled decomposition of biodegradable materials by bioactive materials (e.g., microorganisms, soil fauna, enzymes and fungi) under aerobic conditions. The bioactive materials use the carbon and nitrogen of the biodegradable materials to grow and reproduce, water to digest materials, and oxygen to breathe. Composting thus may allow for biodegradable materials to degrade within a substantially faster timeframe than if disposed in landfills. Moreover, not only does composting help reduce the waste footprint of discarded biodegradable materials, but the degradation of biodegradable materials through the process of composting also advantageously helps restore nutrients to soil.

Despite the benefits of composting, only a portion of discarded biodegradable materials are currently being composted. One of the reasons stems from the fact that different biodegradable materials are characterized by different degradation profiles, and thus decompose at different rates even when exposed to the same composting conditions. For example, the higher (i.e., wider) the carbon-to-nitrogen ratio of a biodegradable material, the longer amount of time it will take for degradation to occur. Similarly, coarser biodegradable materials also take longer to breakdown.

Existing composting systems and methods do not tailor composting conditions to simultaneously accommodate the degradation requirements of biodegradable materials defined by markedly different degradation requirements. Rather, operation of such existing systems and methods subjects all of the biodegradable materials of a batch to the same compost process protocol. As a result, existing systems and methods are not able to both effectively and efficiently degrade a batch of biodegradable materials defined by markedly different degradation profiles (*i.e.,* a batch comprising both easily/quickly degrading biodegradable materials as well as biodegradable materials requiring more effort and time for degradation) concurrently with one another using a single composting structure.

For example, an existing method and system that subjects the mixed batch to a compost process protocol tailored to achieving a desired degree and/or amount of degradation of the more quickly/easily degrading biodegradable materials will achieve only a minimal (if any) amount of degradation of the more slowly degrading materials. As a result, this option is not effective to achieve a desired degree and/or amount of degradation of each of the biodegradable materials of the batch. To that end, existing systems and methods are typically only operated to subject easily and quickly degrading biodegradable materials (*e.g*., food scraps, yard waste, etc.) to composting. Meanwhile, biodegradable materials which require more effort and time to degrade (such as, *e.g.,* leather, bioplastics, textiles, etc.) are instead subject to other forms of disposal (*e.g.*, incineration, landfilling, etc.). As a result, improved systems and methods are desired that are efficient and effective for degrading complex articles, such as footwear.

### SUMMARY

In some embodiments, a method for degrading footwear includes providing at least a portion of a shoe. The shoe is shred into an initial amount of shoe input. The shoe input is defined by shredded particles of the shoe. Bioactive material is added to the shoe input. The shoe input is placed into a container. The container is loaded into a composting vessel. The composting vessel is operated for a period of time. The shoe input is removed from the composting vessel after a conclusion of the period of time. Following the removal of the shoe input, at least about 30 % of the shoe input has a particle size equal to or less than about 12 mm.

In some embodiments, a method for degrading footwear includes loading a first batch of compostable input into a cavity of a composting vessel. The first batch of shoe material is also loaded into the cavity of the composting vessel. The shoe material is derived from one or more shoes. The composting vessel is operated for a first period of time. Following the first period of time, the first batch of compostable material is removed from the composting vessel. Following the conclusion of the first period of time, the composting vessel is operated for a second period of time. The first batch of shoe material is within the cavity of the composting vessel during the second period of time.

Other aspects of the method and system described herein, including features and advantages thereof, will become apparent to one of ordinary skill in the art upon examination of the figures and detailed description herein. Therefore, all such aspects of the articles of footwear are intended to be included in the detailed description and this summary.

### BRIEF DESCRIPTION OF THE DRAWINGS

FIG. 1 is a perspective view of a shoe according to some embodiments;
FIG. 2 is a schematic illustrating a method and system used to degrade shoes alongside the composting of compostable material;
FIG. 3 is a timeline representative of the operation of the method and system in the degradation of shoe material alongside the composting of compostable material;
FIG. 4 is a cross-sectional view of a representative composting vessel of the system of FIGS. 2 and 3;
FIG. 5 is a flowchart representative of an operating protocol used to control a composting vessel, such as the composting vessel of FIG. 4;
FIG. 6A is a perspective view of a representative container of the system of FIGS. 2 and 3;
FIG. 6B is a perspective view of another representative container of the system of FIGS. 2 and 3;
FIG. 7A is another timeline representative of the operation of the method and system in the degradation of shoe material alongside the composting of compostable material;
FIG. 7B is yet another timeline representative of the operation of the method and system in the degradation of shoe material alongside the composting of compostable material;
FIG. 8 is a flowchart representative of a degradation protocol according to which shoe material is degraded; and
FIG. 9 is a flowchart representative of an initial processing phase of a degradation protocol.

### DETAILED DESCRIPTION OF THE DRAWINGS

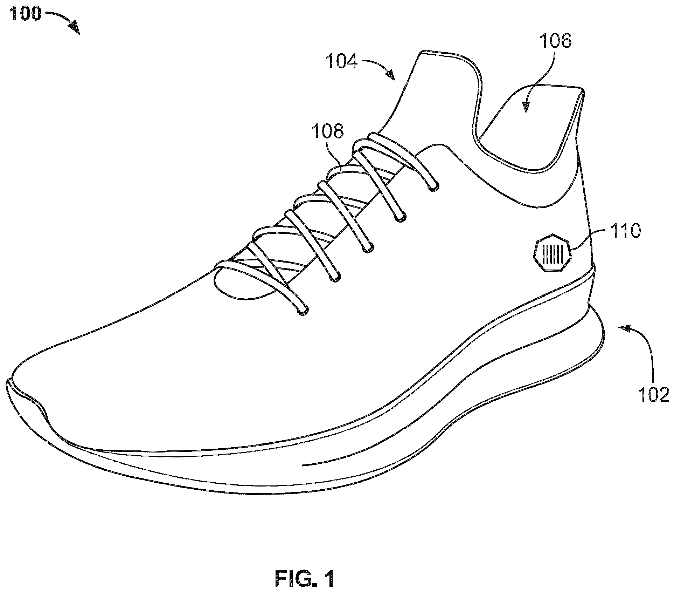

Referring generally to FIGS. 1-9, methods and systems for degrading shoe material concurrently with the composting of compostable material are shown and described according to various embodiments. As discussed herein, the methods and systems disclosed herein are configured to achieve a desired degradation of both the compostable material(s) and shoe material(s) without requiring significant, additional effort and/or time beyond that which would be required to compost a similar amount of solely compostable material using existing composting methods and systems. In other words, the methods and systems allow for the effective degradation of multiple batches of compostable materials in addition to the effective degradation of shoes in a similar timeframe as that which would be required to compost a similar amount of only compostable material (*i.e.,* in the absence of shoes) using existing composting systems and methods. Moreover, the methods and systems described herein are configured to achieve the desired degradation of both compostable material and shoes using only a single composting structure.

The term "about," as used herein, refers to variations in the numerical quantity that may occur, for example, through typical measuring and manufacturing procedures used for articles of footwear or other articles of manufacture that may include embodiments of the disclosure herein; through inadvertent error in these procedures; through differences in the manufacture, source, or purity of the ingredients used to make the compositions or mixtures or carry out the methods; and the like. Throughout the disclosure, the terms "about" and "approximately" refer to a range of values ± 5% of the numeric value that the term precedes.

The term "compostable material" as used herein refers to any number of, and combination of, biodegradable materials that will substantially exhibit a predetermined minimum degree and/or amount of degradation into particles of a predetermined size (or smaller) when subject to composting conditions for a predetermined period of time. For example, in various embodiments compostable material refers to any biodegradable material that is configured to break down into particles sized 12 mm or less within 10 days. In various embodiments, compostable material may include any biodegradable material(s) that are defined as compost waste materials by government, regulatory, or other industry standards. Non-limiting examples of the types of biodegradable materials from which the compostable material described herein may be derived include food scraps (*e.g.,* fruits, vegetables, coffee grounds, etc.), yard waste (*e.g.,* grass and plant clipping, dried leaves, wood chips, etc.), newspaper, cardboard, etc.

As described herein, a "desired degree" of degradation of material (*i.e.,* either compostable material or shoe material) is attained when at least a predetermined percentage of an initial weight and/or volume of a batch of the material has degraded into particles equal to (or smaller) in size than a predetermined final desired size. In other words, a batch of material will have attained a desired degree of degradation when the weight and/or volume of particles having a size that is equal or less than the final desired size is equal to (or greater) than the initial weight and/or volume of the material (*i.e.,* either the compostable material or shoe material) multiplied by the predetermined percentage.

A "desired degree of degradation of shoe material" that is to be attained by the methods disclosed herein may refer to the same degree (*i.e.,* same percentage)-or may refer to a lesser, or greater, degree than that used when referring to a "desired degree of degradation of compostable material" that is to be attained by the method. In various embodiments, a "desired degree of degradation of compostable material" is attained when at least 20%, or at least 30%, or at least 40% of the compostable material is defined by a particle size that is equal to, or less than, the final desired size. In various embodiments, a "desired degree of degradation of shoe material" is attained when at least 20%, or at least 30%, or at least 40% of the shoe material is defined by a particle size that is equal to, or less than, the final desired size.

As described herein, a "desired amount" of degradation of material (*i.e.,* compostable material or shoe material) is attained when a weight and/or volume of particles of the material having a size that is equal to, or less than, the final desired size is equal to (or greater than) a predetermined weight and/or volume of degraded shoe material or compostable material that is to be attained over the course of the method. A "desired amount of degradation of shoe material" may refer to the same volume and/or weight, or may refer to a lower, or higher, volume and/or weight as that used when describing a "desired amount of degradation of compostable material."

The term "final desired size" refers to a predetermined size that is used in assessing whether shoe material and/or compostable material has attained a desired degree and/or amount of degradation. In some embodiments, the "final desired size" may refer to the same size used to separate degraded portions of shoe material and/or compostable material from undegraded portions of shoe material and/or compostable material. In other embodiments, the "final desired size" refers to a size that is greater than a selected sieve size. The predetermined "final desired size" used in assessing shoe material degradation may be the same as, or different than (*e.g*., less than or greater than), the predetermined "final desired size" used in assessing compostable material degradation. In some embodiments, the predetermined "final desired size" of the shoe material and/or the compostable material refers to a size of 15 millimeters (mm) or less, or 12 mm or less, or 9 mm or less, or 7 mm or less, or 5 mm or less, or 3 mm or less, or 1 mm or less.

As used herein, terms such as "degradation" and "degraded" refer to any process through which a material (*e.g.*, a biodegradable material, or any other material) is deteriorated when exposed to one or more stimuli. Non-limiting examples of stimuli that may be capable of deteriorating a material (*e.g*., changing a structural and/or performance characteristic of a material) include, but are not limited to moisture, heat, chemical agents, bioactive materials, mechanical forces, electromagnetic forces, etc. Deterioration of a material may be identified based on an alteration in any number of, and combination of, properties of a material such as, but not limited to weight, volume, breakdown of the material into fragments, a reduction in molecular weight, loss of mechanical strength, loss of surface properties, flexibility, toughness, emission (or passive emanation) of molecules (*e.g*., CO₂, CH₄, and H₂O), etc.

As used herein, terms such as "composting," "composted," and "decomposition" refer to degradation of biodegradable materials via the activity of bioactive materials. Such terms may encompass all stages of decomposition of a biodegradable material, including, *e.g*., biodeterioration (*i.e.,* a surface-level degradation that modifies the mechanical, physical, or chemical nature or property of the biodegradable material), biofragmentation (*i.e.,* a process during which chemical bonds within the biodegradable material are broken), and/or assimilation (*i.e.,* the process during which the products of biofragmentation are integrated into or consumed by bioactive materials).

As described herein, "composting conditions" refer to, *e.g.,* levels of heat, moisture, oxygen, airflow, starting particle size, or other stimuli that are necessary for composting. In addition to providing the requisite conditions that allows for deterioration of a biodegradable material as a result of the activity of bioactive materials, the stimuli to which a biodegradable material is exposed when subject to composting conditions may also subject the biodegradable material to other forms of deterioration (*i.e.,* beyond that provided by the bioactive material). Accordingly, subjecting biodegradable materials to composting conditions may result in degradation resulting from both composting activity, as well as degradation of the biodegradable material stemming from other forms of deterioration.

Since "composting" refers to a particular type of degradation (*i.e.,* deterioration through the activity of bioactive materials), reference herein to the terms "degradation," "degraded," and "degradation" may refer to one or both of deterioration of a material as a result of composting (*i.e.,* as a result of the activity of bioactive material) and/or deterioration of a material resulting from one or more other stimuli (*e.g.*, deterioration resulting from other stimuli to which a material is exposed to when subject to composting conditions). As described herein "shoe material" refers to materials derived from one or more shoes. The shoe material can include any one or more of shoes in their entireties, individual components of shoes (soles, uppers, lacing straps, etc.), and/or individual materials that are used in the construction of shoes (*e.g.*, scrap material that is left over at the conclusion of a shoe manufacturing process).

The shoe material may be collected from any number of sources. For example, in some embodiments the shoe material is obtained during the sorting of municipal recycling and/or composting trash. In other embodiments, the shoe material includes shoes collected as part of a consumer-based business model. For example, in some embodiments, shoes are collected as part of a subscription service and/or rewards-based program in which consumers return used shoes in exchange for a new pair of shoes, a discount, and/or another incentive. In some embodiments in which the shoe material exclusively comprises single-material shoe components and/or embodiments in which the shoe material comprises scrap material, the shoe material can be defined by a single type of material. In other embodiments, *e.g*., where the shoe material comprises shoes in their entireties and/or multi-material components, the shoe material may comprise different materials.

In various embodiments, the shoe material comprises (entirely, or in part) one or more biodegradable materials. Non-limiting examples of biodegradable materials that may define the shoe material include leather, suede, natural fibers (*e.g*., hemp, cotton, etc.), degradable plastics (*e.g.,* TPE, etc.), resin, etc. In other embodiments, the shoe material can additionally, or alternatively, comprise other degradable materials that are capable of achieving a desired degree and/or amount of degradation when subject to the methods and systems described herein. In various embodiments, biodegradable materials (and/or other materials capable of being degraded by the systems and methods) define at least 30%, or at least 40%, or at least 50%, or at least 60%, or at least 70% of the total weight and/or volume of the materials that constitute the combination of collected shoes, shoe components, and/or individual materials that define the shoe material. In some embodiments, the shoe material is derived in part, or exclusively, from shoes (or components thereof) that are specifically configured to facilitate degradation. For example, in some embodiments, substantially all (*e.g.,* at least 70% or at least 80%, or at least 90%, or at least 95% of the total weight and/or surface area) of each of the collected shoes is constructed from biodegradable materials and/or other materials capable of being degraded using the methods and systems described herein.

As one non-limiting example, the selection of biodegradable materials that may be used to construct a shoe that substantially comprises biodegradable materials includes a shoe having a sole structure comprising one or both of an outsole and a midsole that is made from biodegradable TPE forming between about 45%-55% by weight of the shoe, an upper made from leather (*e.g.,* ZEOLOGY suede) that forms between about 17-27% by weight of the shoe, a lining and sockliner made from hemp and/or cotton that together form between about 10-20% by weight of the shoe, padding and laces made from hemp that together form between about 1.0%-10% by weight of the shoe, a heel and toe cap made from cotton and a polyester-blend resin that together form between about 0.50%-3.0% by weight of the shoe, and stitching and embroidery made from cotton that forms between about 0.10-1.0% by weight of the shoe.

As another example, the shoes may be configured to facilitate degradation by utilizing connections between components that facilitate separation of the components of the shoe upon their disposal, *e.g.,* via use of a degradable adhesive, using a stitching pattern that facilitates tearing, etc. Shoes according to such embodiments may thus allow for easier sorting of the components of the shoes upon their disposal. In yet other embodiments, the biodegradable materials used in the construction of the shoes may have been subject to a treatment configured to enable the treated biodegradable material to degrade in an expeditated manner, *i.e.,* as compared with a similar, untreated biodegradable material. For example, some of the biodegradable materials from which the collected shoe material is derived are coated, laminated, infused with, or otherwise contain one or more compounds (*e.g*., enzymes, microorganisms, etc.) that are configured to increase the rate of degradation of the biodegradable material. Non-limiting examples of compounds that can be used to treat biodegradable materials and/or examples of biodegradable materials treated with such compounds are provided in co-pending U.S. Patent Application 17/119,303, filed on December 11, 2020, published as U.S. 2021/0093044, and entitled ARTICLE OF FOOTWEAR HAVING A DEGRADABLE COMPONENT, the content of which is incorporated by reference herein in its entirety.

The shoes from which the shoe material is derived can comprise any number of different types of footwear, such as, *e.g.,* athletic shoes, leisure shoes, sandals, slippers, boots, heels, dress shoes, etc. In some embodiments, shoe material may additionally, or alternatively, refer to any other items, or materials derived therefrom, that are capable of being degraded using the methods and systems described herein. Non-limiting examples of such other items include athletic equipment (*e.g.,* protective pads, shin guards, etc.), articles of clothing (*e.g.,* shirts, shorts, pants, hats, socks, calf sleeves, headbands, wristbands, arm sleeves, gloves, etc.), or other consumer or industrial products.

One non-limiting example of a shoe from which shoe material may be derived is illustrated in FIG. 1. As shown in FIG. 1, the shoe 100 generally includes a sole structure or sole 102 and an upper 104. In some embodiments, the sole 102 may include an outsole that provides structural integrity, along with providing traction for a user, a midsole that provides a cushioning system, and a padded insole that provides support for an arch of a user. The sole 102 and upper 104 are connected to each other (*e.g.,* via adhesive, stitching, etc.) to define an interior cavity 106 into which a foot of a user may be inserted. A lining and/or padding is optionally provided along an inner surface of the upper 104. The upper 104 also optionally includes a plurality of apertures formed therethrough configured to receive a fastening system, such as a lace 108.

According to various embodiments, the shoe 100 optionally includes a unique machine-readable identifier 110 (*e.g.,* an RFID tag, an IR and/or NIR marker, a QR code, a barcode, etc.) that associates the shoe with information related thereto. For example, in some embodiments the information associated with the machine-readable identifier 110 may include an identification of the materials used in the construction of the shoe 100 and/or instructions regarding the composting conditions best suited to achieving degradation of the shoe 100. In embodiments in which the shoe 100 is provided as part of a consumer-based business model, the information may optionally also include an identification of a user profile associated with the shoe 100.

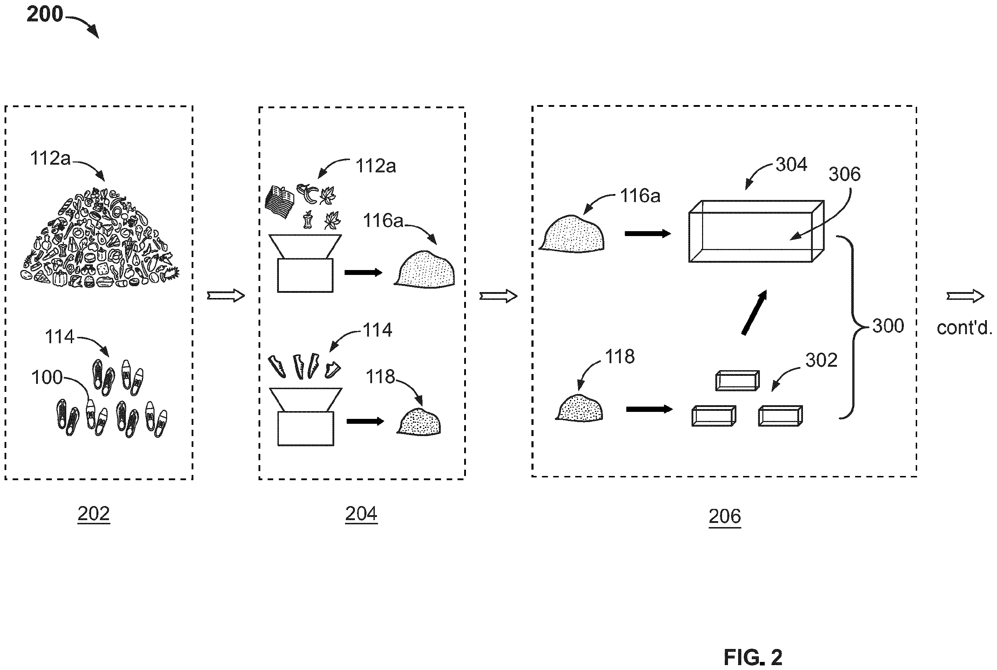

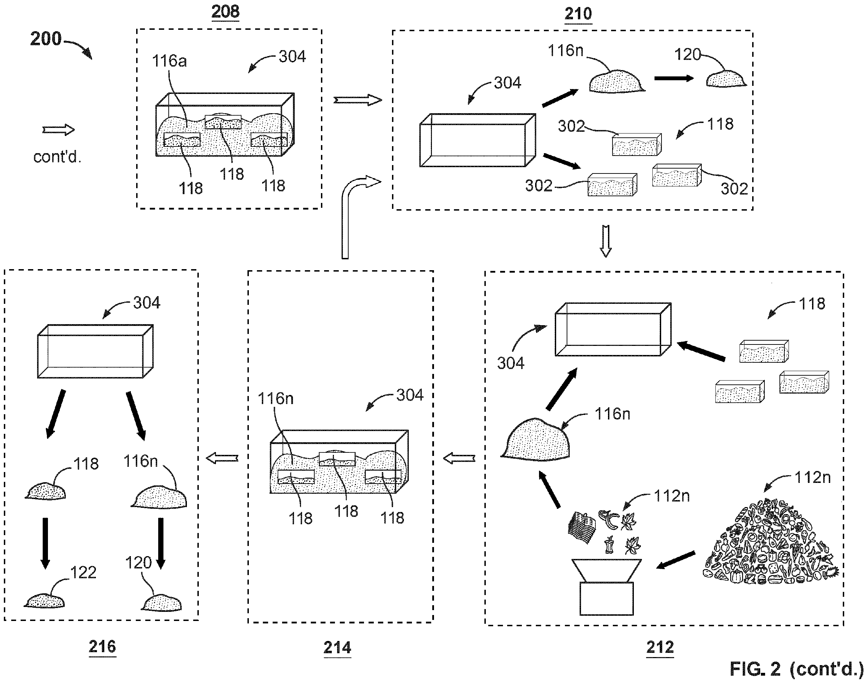

Turing to FIGS. 2-9, additional details regarding a method 200 and a system 300 are provided with reference to various example embodiments that illustrate how the shoe 100 can be efficiently and effectively degraded. In general, the method 200 and system 300 for degrading shoe material 114 is described in connection with the degradation of compostable material 112, and the method 200 and system 300 overcome the failures of existing composting methods and systems to offer a solution via which biodegradable materials, defined by markedly different degradation requirements (such as, *e.g*., compostable material 112 and shoe material 114), can be concurrently degraded using a single composting structure in a manner that is both effective and efficient.

Referring specifically to FIG. 2, the method 200 begins at step 202 with the collection of compostable material 112a and shoe material 114. At step 204, a first batch of the compostable material 112a and a first batch of the shoe material 114 are subject to initial processing during which the first batch of compostable material 112a and the first batch of shoe material 114 each undergo one or more processing steps that are configured to assist with degradation. Upon conclusion of the initial processing at step 204, the first batch of compostable material 112a is rendered into a first batch of compostable input 116a, and the first batch of shoe material 114 is rendered into a first batch of shoe input 118.

As shown in FIG. 2, at step 206 the first batch of shoe input 118 is placed into one or more containers 302 of the system 300. The filled containers 302 and the first batch of compostable input 116a are then loaded into a composting vessel 304, and more specifically, into a cavity 306 of the composting vessel 304. As discussed in detail below, the containers 302 of the system advantageously maintain the compostable input 116 and shoe input 118 separate from one another, while also allowing the shoe input 118 and compostable input 116 to simultaneously be subject to composting conditions created within the cavity 306 of the composting vessel 304 during the composting process. With the first batch of compostable input 116a and shoe input 118 loaded into the cavity 306, an initial run of the composting vessel is initiated at step 208.

During each run, the composting vessel 304 is operated in accordance with an operating protocol to attain desired composting conditions within the cavity 306 during this first run 308a (as well as during each subsequent run 308b, 308c, ... 308n) of the composting vessel 304. In addition to controlling composting condition parameters such as, *e.g*., temperature, humidity, airflow, light constant, etc., the operating protocol also controls the duration of each run 308 of the composting vessel 304. As discussed in more detail below, the operating protocol according to which the composting vessel 304 is operating is configured to achieve a desired degree and/or amount of degradation of the batch of compostable input 116a, 116b, 116c, ... 116n loaded into the cavity at the start of the run of the composting vessel 304. Accordingly, after the run of the composting vessel 304 initiated at step 208 has concluded, the first batch of compostable input 116a is ready to be removed from the composting vessel 304 at step 210.

Still referring to FIG. 2, during step 210 the unloaded first batch of compostable input 116a is then sieved, with the degraded portions of the first batch of compostable input 116a being collected as compost 120. As discussed in more detail below, in some embodiments the shoe input 118 is optionally also removed from the cavity 306 at step 210 and subject to sieving and/or to one or more other additional processing steps. The sieving of the first batch of compostable input 116a concludes the composting protocol of the first batch of compostable material 112a.

Given the increased degradation requirements of shoe material 114 (*i.e.,* as compared against those of compostable material 112), the duration of a single run of the composting vessel 304 in accordance with an operating protocol tailored to the compostable material 112 may not provide the shoe material 114 with the exposure to composting conditions that would typically be required to achieve a desired degree and/or amount of degradation. Thus, in contrast to the first batch of compostable input 116a, the shoe input 118 will not have reached a desired degree and/or amount of degradation by the conclusion of the initial run 308a of the composting vessel 304.

Accordingly, during step 212 the shoe input 118 is reintroduced into the composting vessel 304 (or-in the event that the shoe input 118 was not removed from the composting vessel 304 during step 210-remains within the composting vessel 304). As shown in FIG. 2, during step 212 a second batch of compostable material 112b is rendered into a second batch of compostable input 116b, which is then also loaded into the cavity 306 of the composting vessel 304. At step 214 a new run of the composting vessel is initiated, thus subjecting the shoe input 118 and the second batch of compostable material 112b to the composting conditions created by the operation of the composting vessel 304.

As with the first batch of compostable material 112a, the conclusion of the run of the composting vessel 304 initiated at step 214 marks the end of the exposure to composting conditions to which the second batch of compostable material 112b is exposed during method 200. Accordingly, after the run of the composting vessel 304 initiated at step 214 concludes, step 210 is repeated-this time with the second batch of compostable material 112b being unloaded from the composting vessel 304 and sieved to collect compost 120. Similar to the discussion above, the shoe input 118 may also optionally be removed from the cavity 306 and subject to sieving and/or to one or more other additional processing steps during this second occurrence of step 210.

Following the conclusion of the second occurrence of step 210, the sequence of steps 212, 214, and 210 may be repeated any number of additional times (with the shoe input 118 being subject to additional composting alongside a new batch of compostable material 112n during each repeated cycle of steps 212, 214, and 210) until a desired degree and/or amount of degradation of the shoe material 118 has been attained. Once a desired degree and/or amount of degradation of the shoe material 118 has been attained, the shoe input 118 and the final batch of compostable input 116n are unloaded from the composting vessel 304 during step 216. The unloaded final batch of compostable input 116n is sieved, with the degraded portions of the compostable material 112n being collected as compost 120. The shoe input 118 is also similarly sieved during step 216, with degraded portions of the shoe material 114 being collected as compost 122. The conclusion of step 216 marks the end of method 200.

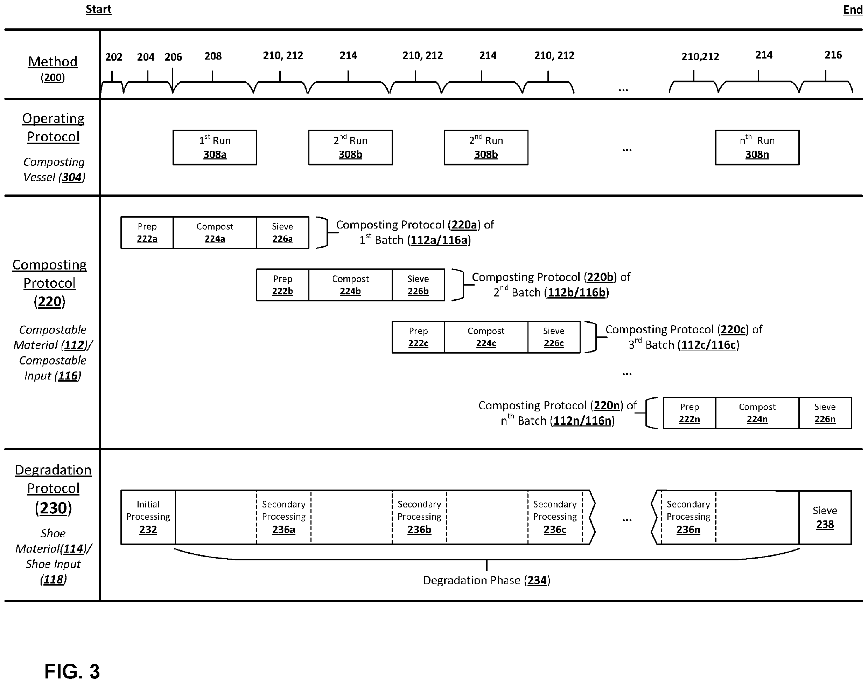

Turning to FIG. 3, a timeline representative of the method 200 is described according to one non-limiting embodiment. As shown in FIG. 3, during the method 200 each batch of compostable material 112a, 112b, 112c, ... 112n is subject to a composting protocol 220a, 220b, 220c, ... 220n, during which the compostable material 112 is exposed to the requisite processing steps and composting conditions needed to achieve a desired degree and/or amount of degradation of the compostable material 112. Similarly, the shoe material 114 is subject to a degradation protocol 230 which exposes the shoe material to the requisite processing steps and composting conditions needed to achieve a desired degree and/or amount of degradation of the shoe material 114.

As shown in FIG. 3, following the conclusion of step 202, both the composting protocol 220 and degradation protocol 230 begin at step 204 with an initial processing step. The processing steps to which the compostable material 112a are subjected to during the initial processing step 204 are defined by a preparation phase 222a of the composting protocol 220a to which the first batch of compostable material 112a is subject. The processing steps to which the shoe material 114 are subject during the initial processing step 204 are defined by an initial processing phase 232 of the degradation protocol 230. The selection, sequence and/or duration of the processing steps to which the compostable material 112 and shoe material 114 are subject during the preparation phase 222 and initial processing phase 232, respectively, may be similar to, or different than one another. Although the preparation phase 222 and initial processing phase 232 of step 204, as well loading step 206, are shown in FIG. 3 occurring simultaneously, it will be appreciated that the timing of the preparation phase 222 and/or loading of the first batch of compostable input 116a into the composting vessel 304 may be independent of (*i.e.* may be performed prior to, concurrently with, or subsequent to) the initial processing step 232 and/or loading of the shoe input 118 into the composting vessel 304.

Referring to the timeline of FIG. 3 in connection with the schematic of FIG. 2, the commencement of the first run 308a of the composting vessel 304 at step 208 marks the start of the composting phases (*i.e.,* compost phase 224 and degradation phase 234) of each of the composting protocol 220 and degradation protocol 230, respectively. The duration of the compost phase 224 of the composting protocol 220 corresponds to the length of exposure to composting conditions required to achieve a desired degree and/or amount of degradation of the compostable material 112. The duration of the degradation phase 234 of the degradation protocol 230 similarly corresponds to a length of exposure to composting conditions required to achieve a desired degree and/or amount of degradation of the shoe material 114. As shown in FIG. 3, given the increased degradation requirements of shoe material 114 (*i.e.,* as compared to those of compostable material 112), the duration of the degradation phase 234 of the degradation protocol 230 is longer than that of the compost phase 224 of the composting protocol 220.

As discussed above, subjecting relatively quickly degrading biodegradable materials (such as, *e.g.,* compostable material 112) to composting conditions tailored to more slowly degrading biodegradable materials (such as, *e.g.,* shoe material 114) unnecessarily subjects such relatively quickly biodegrading materials to processing steps and/or exposure to composting conditions in excess of what is needed to achieve a desired degree and/or amount of degradation of the quickly degrading biodegradable materials. Additionally, extending the run time of a composting structure to accommodate the longer exposure to composting conditions required by more slowly degrading biodegradable materials reduces the throughput with which the composting structure can compost the more quickly degrading biodegradable materials.

Thus, to minimize (or avoid) such operational inefficiencies, in various embodiments the operating protocol according to which the composting vessel 304 is operated is tailored to the degradation requirements of the compostable material 112. For example, in various embodiments the duration of each run 308 of the composting vessel 304 is set to correspond with (*i.e.,* be the same as) the duration of the compost phase 224 of the composting protocol 220 to which each batch of compostable material 112 is subject. Thus, as shown in FIG. 3, the conclusion of the initial run 308a of the composting vessel 304 initiated at step 208 coincides with the conclusion of the compost phase 224a of the first batch of compostable material 112a. In addition to providing the shoe material 118 with additional exposure to composting conditions, in various embodiments the degradation of the shoe input 118 is optionally facilitated (*e.g*., expedited) by subjecting the shoe input 118 to additional processing steps during the degradation phase 234 (such as, e.g., during step 210 as discussed above with reference to FIG. 2).

Accordingly, as illustrated in FIG. 3 (and discussed in more detail below) in some embodiments the degradation phase 234 includes one or more secondary processing phases 236a, 236b, 236c, ... 236n during which the shoe input 118 is subject to additional processing steps. The separation of the shoe input 118 and compostable input 116 provided by the containers 302 of the system 300 over the course of method 200 plays an important role in allowing the composting protocol 220 and degradation protocol 230 to subject the compostable material 112 and shoe material 114 to conditions that are tailored to the degradation needs of each material. For example, at the conclusion of the first run 308a of the composting vessel 304, the containers 302 of the system 300 allow the shoe input 118 to be easily, quickly and effectively isolated from the first batch of compostable input 116a, and to be added alongside a second batch of compostable input 116b for further exposure to composting conditions created during a second run 308b of the composting vessel 304. Thus, the containers 302 allow the degradation protocol 230 to leverage multiple runs 308 of the composting vessel 304 to provide the shoe input 118 with the required extended exposure to composting conditions in a manner that does not unnecessarily subject the compostable material 112 to such unnecessary extended exposure, and in a manner which only minimally (if at all) impacts the throughput (*i.e.,* rate) with which a similar volume of compostable material 112 could be composted in the absence of the shoe material 114.

Similarly, during the one or more secondary processing phases 233 of the degradation protocol 230, the ability to easily separate the shoe input 118 from the compostable input 116 provided by the containers 302 advantageously allows the additional processing steps of the secondary processing phase 233 to be selectively applied to only the shoe input 118. For example, in various embodiments the shoe input 118 may be removed from the composting vessel 304 during a run 308, subject to one or more processing steps of a secondary processing phase 233, and subsequently reloaded into the composting vessel 304 in a manner that only minimally (if at all) disrupts the compost phase 224 to which the compostable input 116 is subject. Thus, the containers 302 additionally allow the shoe input 118 to be exposed to additional processing steps tailored to the degradation needs of the shoe material 114, without unnecessarily subjecting the compost material 112 to such efforts.

As described with reference to the schematic of FIG. 2, selective degradation control can be achieved by isolating the compostable material 112 and the shoe material 114 from one another through the use of one or more containers 302 of the system 300. Further, by leveraging multiple runs 308 of a composting vessel 304 of the system 300 to subject the compostable material 112 and shoe material 114 to processing protocols (*i.e.,* a composting protocol 220 and a degradation protocol 230, respectively) the degradation process can be tailored to the specific degradation requirements of each type of material.

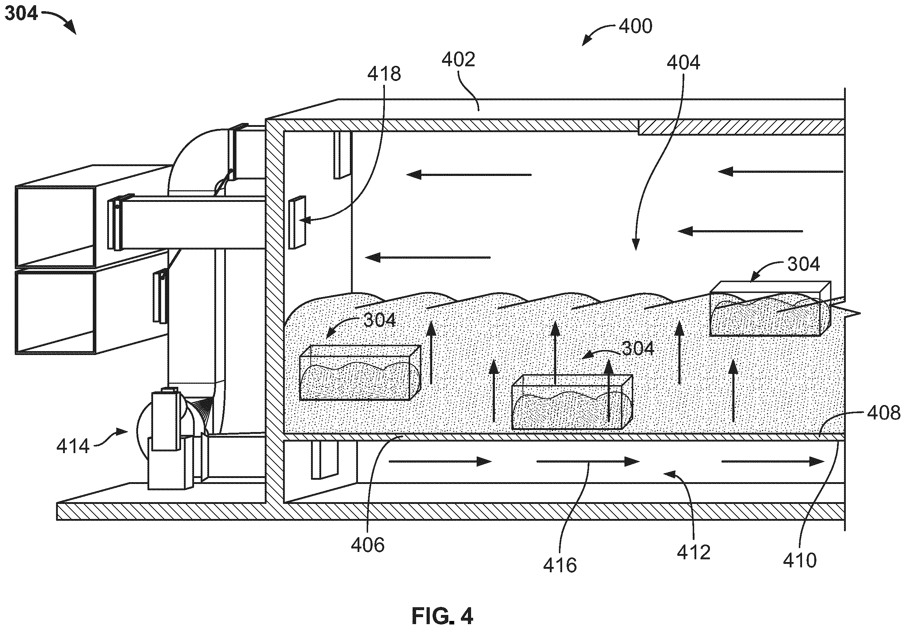

Additional detail regarding the composting vessel 304 (and operating protocol according to which it is operated) and containers 302 of the system 300, as well as additional details regarding the degradation protocol 230 to which the shoe input 118 is subject during method 200 are described with reference to FIGS. 4-9. In general, the composting vessel 304 of the system 300 may be defined by any number of composting structures that can be operated to attain desired composting conditions (*e.g.*, temperature levels, moisture levels, light levels, oxygen levels, rates of airflow, etc.) for predetermined lengths of time. For example, in various embodiments the composting vessel 304 is optionally defined by a composting structure used by existing methods and systems for composting waste material.

Turning to FIG. 4, a composting vessel 304 is shown according to one example embodiment. As illustrated by FIG. 4, according to various embodiments the composting structure defined by the composting vessel 304 comprises a composting tunnel 400. The composting tunnel 400 includes a housing 402 that defines a main cavity 404 configured to receive compost input (*e.g.,* compostable input 116 and/or shoe input 118). An apertured (*e.g*., slatted) support structure 406 extends within the housing 402. The upper surface 408 of the support structure 406 defines a surface onto which compost input can be loaded.

A lower surface 410 of support structure 406 defines an air passageway 412 through the housing 402. The air passageway 412 extends along a length of a lower surface 410 of the support structure 406. Apertures (not shown) of the support structure 406 provide fluid communication between the air passageway 412 and the main cavity 404. In various embodiments an area of the upper surface 408 of the support structure 406 is approximately 150 m². However, in other embodiments the composting tunnel 400 can be constructed having a support structure 406 surface area and/or main cavity 404 volume of any other desired size.

As shown in FIG. 4 the air passageway 412 is connected to a forced airflow source 414 (*e.g.,* a pump, a fan, etc.). As indicated by arrows 416, operation of the forced airflow source 414 causes air to move through the air passageway 412. The apertures of the support structure 406 allow air flowing through the air passageway 412 to flow into the main cavity 404 of the housing 402. During operation of the compositing tunnel 400, air is thus able to flow through the compost input supported along the support structure 406 and thereby aerate the compost input. In various embodiments, water collection containers (not shown) are optionally positioned relative to the apertures of the support structure 406 to collect water run-off from the compost input during operation of the composting tunnel 400.

Still referring to FIG. 4, the main cavity 404 of the housing 402 is in fluid communication with an airflow outlet 418 that allows air to be expelled from the main cavity 404. In various embodiments, a filter (not shown) is optionally attached to the air flow outlet 418, allowing unwanted particles (*e.g*., ammonia) to be removed from the air exiting the main cavity 404 prior to the air being released into the ambient environment.

The operating protocol according to which the composting vessel 304 is operated defines the composting conditions created within the cavity 306 of the composting vessel during each of its runs 308. In addition to controlling operation of the vessel 304 to attain desired levels of different parameters (*e.g.*, temperature, moisture, airflow, oxygen, etc.) in a predetermined sequence, the operating protocol also defines the overall duration of each run 308 of the composting vessel 304. In embodiments in which the operating protocol is tailored to the degradation requirements of the compostable material 112, the operating protocol may be based on (*e.g.,* the same as) existing compost process protocols used to control the operation of existing composting structures used in the composting of compost waste material.

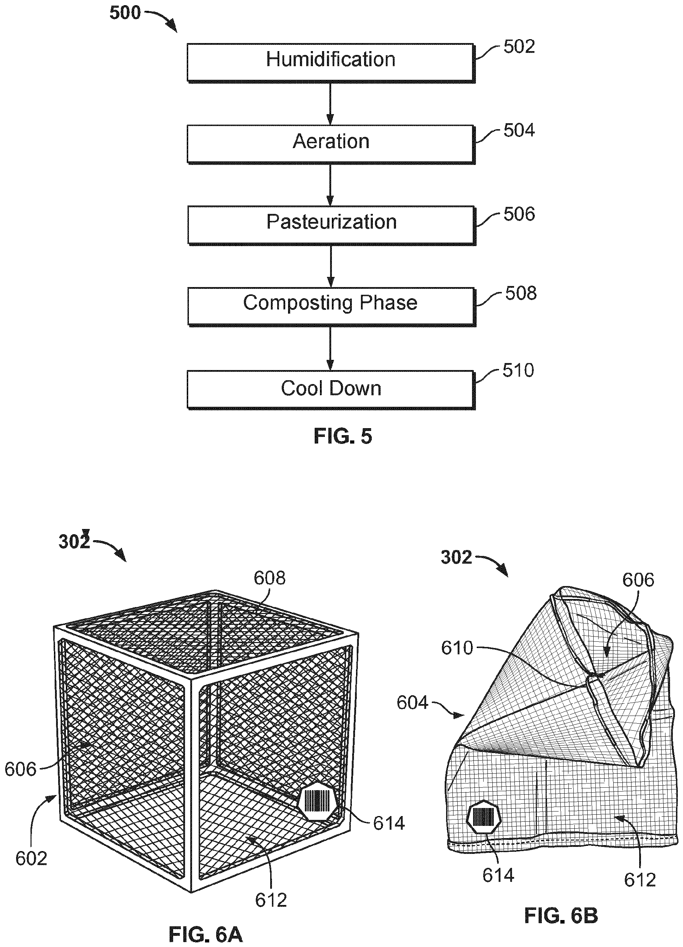

Turning to FIG. 5, an operating protocol 500 according to which the composting vessel 304 is operated is described according to one example embodiment. As shown in FIG. 5 the operating protocol 500 begins at step 502 with a humidification phase. During the humidification phase of step 502 the operating protocol 500 controls operation of the composting vessel 304 (*e.g.,* controls operation of misters, sprayers, or other fluid dispensing devices of the composting vessel 304) to achieve a desired humidity level within the cavity 306 of the composting vessel 304 and/or to achieve a desired moisture content of the compost input (*i.e.,* compostable input 116 and shoe input 118) contained therein. In various embodiments, a moisture content of the compost input and/or a humidity level within the cavity 306 of the composting vessel 304 is maintained at a level between about 20% and 80%, or between about 30% and 70%, or between about 40% and 60%). In various embodiments, the operating protocol 500 optionally repeats the humidification phase of step 502 at one or more times during the run 308 of the composting vessel 304 to help ensure that sufficient humidity levels are maintained within the cavity 306 and/or that the compost input is maintained at appropriate moisture levels.

Still referring to FIG. 5, the water used during the humidification phase of step 502 optionally contains nutrients and/or bioactive material that aid with the degradation (*e.g*., decomposition) of the compost input. For example, in some embodiments the water that is used at step 502 includes run-off water that has been collected during a prior operation of the composting vessel 304 and/or during a prior operation of a different composting structure. During step 504, the operating protocol 500 controls operation of the composting vessel 304 to ensure sufficient exposure of the compost input to the aerobic conditions required for composting. For example, in some embodiments the operating protocol 500 controls operation of a forced airflow device of the composting vessel 304 (such as, *e.g.,* the forced airflow source 414 of the composting tunnel 400 of the composting vessel 304 embodiment of FIG. 4) to attain a desired minimum airflow (*e.g.,* an airflow of at least 0.1 m³/hr) through the cavity 306 of the composting vessel 304. In other embodiments, the operating protocol 500 alternatively, or additionally, controls operation of the composting vessel 304 to directly and/or indirectly agitate, and thereby cause aeration of, the compost input.

For example, in the composting vessel 304 embodiment of FIG. 4, the composting tunnel 400 is optionally operated at step 504 to move (*e.g.*, shake, vibrate, rotate, etc.) the support structure 406 to indirectly agitate the compost input particles supported thereon. Alternatively, or additionally, in other embodiments the operating protocol 500 controls operation of the composting vessel 304 to directly agitate the compost input by agitating, *e.g*., mixing, stirring, rotating, or otherwise causing movement (and corresponding aeration) of the compost input. In various embodiments, the operating protocol 500 optionally repeats the aeration phase of step 504 at one or more times during the run 308 of the composting vessel 304 to help ensure that the compost input remains subject to the aerobic conditions required for composting.

Still referring to FIG. 5, at step 506, the operating protocol controls operation of the composting vessel 304 to subject the compost input to a hygiene phase (*e.g*., pasteurization) during which the temperature within the cavity 306 of the composting vessel is raised to a predetermined hygiene temperature (*e.g.*, a temperature of at least 50°C, and preferably a temperature of at least 60°C). This hygiene temperature is maintained for a predetermined period of time (*e.g.,* a period of about 24 hours) to promote natural scalding/pasteurization of the compost input-and to thereby help minimize (*e.g*., prevent) unwanted or undesired seed and/or microorganism growth.

At step 508 the operating protocol operates the composting vessel to reduce the temperature within the composting vessel 304 from the hygiene temperature attained at step 506 to a lower, predetermined composting temperature (*e.g*., a temperature of between 40 °C and 60 °C). The operating protocol then controls operation of the composting vessel 304 to maintain this composting temperature for a predetermined period of time. As discussed above, different biodegradable materials are defined by different rates of degradation. Accordingly, in various embodiments the duration of the predetermined period of time will vary based on the degradation needs of the specific batch of compostable material 112 that is to be subject to the composting conditions of the composting vessel 304 during a run 308. In various embodiments, the duration of the predetermined period of time of step 508 is between about 5 days and about 15 days, *e.g.,* a period of about 10 days. In other embodiments, the duration of the predetermined period of time of step 508 may be any other desired length of time. The operating protocol concludes at step 510 with an optional cool-down phase during which the temperature within the composting vessel 304 is cooled from the composting temperature of step 508 to provide the compost input time to cool before it is removed from the composting vessel 304 at the conclusion of its run 308.

Referring to FIG. 6A and FIG. 6B, a container 302 of the system 300 is shown and described with reference to two representative embodiments. In other embodiments, the containers 302 of the system 300 may be defined by any number of other structures that allow the shoe input 118 and compostable input 116 to be maintained separate from one another, while allowing the shoe input 118 and compostable input 116 to be simultaneously subject to the composting conditions created within the composting vessel 304 during its operation. The containers 302 may be made of any number of, or combination of, materials that are capable of withstanding repeated exposure to the composting conditions created within the composting vessel 304. As representatively illustrated by FIG. 6A, in various embodiments the container 302 is constructed from rigid, or semi-rigid materials, that provide the container 302 with a generally defined and relatively rigid structure (*e.g.,* a box-like structure 602). In other embodiments, such as shown in FIG. 6B, the container is constructed from flexible materials, and is defined by a bag-like structure 604.

Still referring to FIGS. 6A and 6B, the containers 302 define a cavity 606 that may be sized to hold any desired amount of shoe input 118. For example, in some embodiments the containers 302 are sized to contain shoe input 118 derived from a single pair of shoes. In other embodiments, the containers 302 may be sized to contain shoe input 118 derived from multiple shoes. For example, in some embodiments a volume of the cavity 606 of the container 302 into which shoe input 118 can be placed is at least 0.05 m³. Access to the cavity 606 of the container 302 is optionally selectively sealed, so as to prevent loss of the shoe input 118 during the method 200. Non-limiting examples of closure elements that may be used to selectively seal the cavity 606 include: a lid 608 (see FIG. 6A), a zipper, a tie 610 (see FIG. 6B), etc.

Still referring to FIGS. 6A and 6B, the containers 302 may be defined by any shape and/or size that is capable of fitting into the cavity 306 of the composting vessel 304. In some embodiments, the containers 302 may include multiple containers 302 of differing volumes that can accommodate batches of shoe input 118 of different volumes. For example, in some embodiments the shoe input 118 is moved into progressively smaller containers 302 as a batch of shoe input 118 degrades over the course of method 200, thereby freeing up space within the cavity 306 of the composting vessel 304 that can be used to process additional batches of shoe material 114 and/or compostable material 112.

As shown in FIGS. 6A and 6B, to ensure that the shoe input 118 contained within the cavity 606 of the container 302 is capable of being subject to the composting conditions created within the composting vessel 304, a substantial portion (*e.g.,* at least 50%, or *e.g.,* at least 70%) of the overall surface area of the container 302 is provided with apertures 612 that provide fluid communication between the cavity 606 of the container 302 and the ambient environment. The apertures 612 may be defined by holes formed through the material(s) used to construct the container 302, and/or may be defined an apertured construction of the material itself (*e.g.,* via the use of mesh-like and/or woven materials in the construction of the containers 302).

To avoid loss of undegraded portions of the shoe input 118 through the apertures 612, in various embodiments the apertures 612 are sized to be similar to (slightly larger than, equal to, or smaller than) a final desired size of the shoe input 118 particles. In some embodiments in which the shoe input 118 is sieved during the degradation protocol 230 (*e.g.,* during a secondary processing phase 233 and/or during an optional sieving phase 236) a size of the apertures 612 may be defined by the same size (or about the same size) as that of the final desired size of the shoe input 118. For example, in various embodiments the apertures 612 are defined by a size of 12 mm or less, or 10 mm or less, or 8 mm or less, or 6 mm or less, or 4 mm or less). In such embodiments, the apertures 612 of the container 302 may thus act as a sieve via which the degraded portions of the shoe input 118, *i.e.,* portions of the shoe input 118 that are equal, or smaller in size than the final desired size, can be sorted from the undegraded portions of the shoe input 118, *i.e.,* portions of the shoe input 118 that are larger in size than the final desired size.

In some embodiments, it may be desired to maintain the degraded portions of shoe input 118 separate from the compostable input 116. Thus, the apertures 612 are sized sufficiently smaller that the final desired size, so as to contain both the undegraded portions and degraded portions of the shoe input 118 within the container 302 over the course of the method 200. In addition to being defined by a maximum size (*e.g.,* a size that is generally equal to, or less than, a final desired size), the apertures 612 in various embodiments are also defined by a minimum opening size (*e.g.,* a size of at least 2 mm, at least 4 mm, etc.), so as to ensure sufficient airflow into the cavity 606 and through the shoe input 118 contained therein.

As shown in FIGS. 6A and 6B, in various embodiments the containers are optionally provided with a machine-readable label 614. As discussed in detail below, the machine-readable label 614 allows information specific to a batch of shoe input 118 (*e.g.*, baseline information collected during step 910) to be associated with the particular container 302 within which the batch of shoe input is contained. As also discussed below, use of the machine-readable label 614 of a container 302 during the degradation protocol 230 to obtain information regarding the shoe input 118 contained within a particular container 302 may accordingly help tailor the specific parameters of one or more steps of the degradation protocol 230 to the particular degradation requirements of the shoe material 114 contained therein.

In embodiments in which the shoe material 114 is derived (in whole, or in part) from collected shoes associated with a machine-readable identifier, the baseline information associated with the machine-readable label 614 of a container 302 may include identification of the unique user profile(s) associated with one or more shoes that define the shoe material 114 contained within the container 302. Thus, in some embodiments the information associated with the machine-readable label 614 may allow users to track the progress of the degradation of their discarded shoes as part of a consumer-based business model.

In the discussion above, the containers 302 have been described as structures that are distinct/removable from the composting vessel 304. As will be appreciated, such containers 302 may advantageously allow the method 200 to be used be used with existing composting structures, without requiring significant economic investment in the replacement and/or retrofitting (or other modification) of such existing composting structures. However, as will be appreciated, in some embodiments, some (*e.g.,* all) of the containers 302 may alternatively (or additionally) be defined by a structure of the composting vessel 304. For example, an interior of composting vessel 304 may be subdivided into one or more compartments that define the containers. In some such embodiments, the compartments can optionally be defined by moveable walls, which can allow the sizing of the containers to vary based on the relative volumes of compostable input 116 and shoe input 118 being composted. Also, although the containers 302 have been described as being used to contain the shoe input 118, in various embodiments the containers 302 may alternatively, or additionally, be used to contain the compostable input 116 during the method 200.

As discussed above, the containers 302 of the system 300 advantageously allow compostable input 116 and shoe input 118 to be subject to a composting protocol 220 and degradation protocol 230, respectively, that are tailored to the differing degradation requirements of each type of material. However, as will be appreciated, there may also be differences amongst the degradation requirements of different types of shoe material 114. Although the differences between different batches of shoe material 114a, 114b, ... 114n may not be as significant as those between the shoe material 114 and compostable material 112, tailoring the degradation protocol 230 to the specific degradation needs of different batches of shoe material 114a, 114b, ... 114n may further help increase the efficiency and effectiveness with which the method 200 and system 300 are able to degrade shoe material 114.

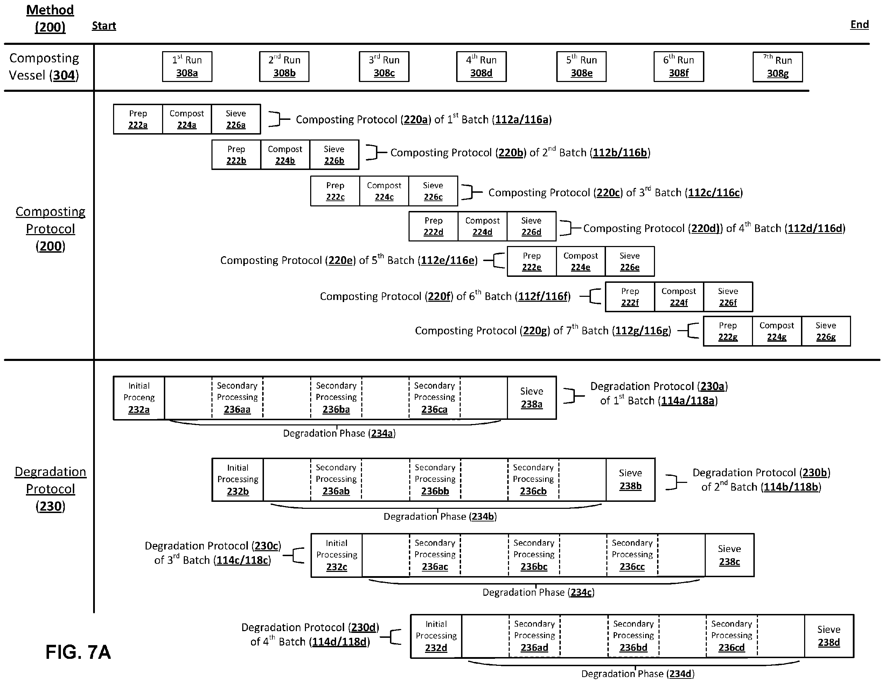

As representatively illustrated in FIG. 7A, the use of containers 302 thus may allow for the staggered degradation of different batches of shoe material 114a, 114b, ... 114n over the course of method 200. For example, additional shoes 100 collected after the initiation of a degradation protocol 230a for a first batch of shoe material 114a can be subject to degradation alongside the first batch of shoe material 114a without having to wait for the degradation protocol 230a of the first batch of shoe material 114a to conclude.

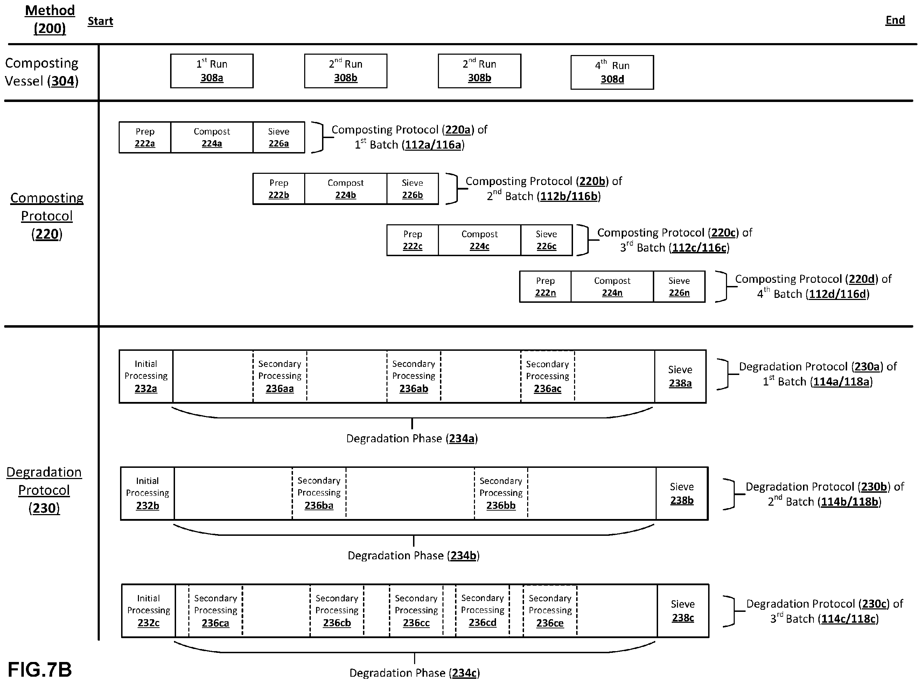

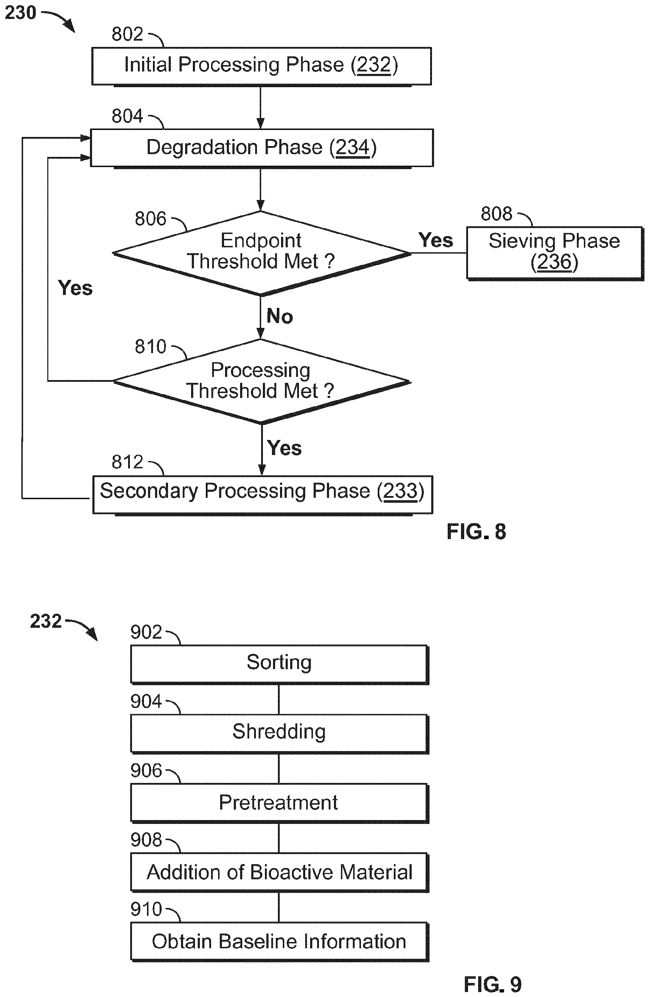

As representativity illustrated in FIG. 7B, (and as discussed in more detail below) in such embodiments in which the degradation protocol 230 is optionally thus tailored to the particular degradation needs of specific batches of shoe input 118a, 118b, ... 118n, the containers 302 of the system 300 advantageously allow the different batches of shoe input 118a, 118b, ... 118n to be subject to degradation protocols 230a, 230b, ... 230n that are defined by: different initial processing phases 232a, 232b, ... 232b; degradation phases 234a, 234b, ... 234n of differing lengths; and/or a different number, selection and/or timing of secondary processing phases 233aa, 233ab, ... 233an. Additional details regarding the degradation protocol 230 to which the shoe material 114 are subject during the method 200 are described with reference to the flowchart of FIG. 8.

As shown in FIG. 8, the degradation protocol 230 begins at step 802 with the initial processing phase 232. The degradation protocol 230 continues at step 804 with the initiation of the degradation phase 234, during which the shoe input 118 is subject to the composting conditions of multiple runs 308a, 308b, ...308n of the composting vessel 304. At step 806 a determination is made as to whether the shoe input 118 has been subj ect to the degradation phase 234 for a sufficient period of time (*i.e.,* whether the shoe input 118 has been exposed to the composting conditions of the composting vessel 304 for the requisite length of time needed to attain a desired degree/and or amount of degradation). As discussed in detail below, this determination is made at step 806 based on whether a predetermined endpoint threshold has been met. Upon determining that the threshold condition has been met at step 806, the degradation protocol 230 optionally subjects the shoe input 118 to the sieving phase 236 at step 808, following which the degradation protocol 230 is ended. In contrast, if the predetermined endpoint threshold has not been met, a determination is made at step 810 as to whether a processing threshold (also discussed in more detail below) has been met. If the processing threshold has been met, the shoe input 118 is subject to an initial secondary processing phase 233a at step 812.

Following the conclusion of the initial secondary processing phase 233a-or in the event that it is determined at step 810 that the processing threshold has not been met-the shoe input 118 continues to be subject to the composting conditions of the degradation phase 234 of step 804. As will be appreciated, steps 806, 810, and 812 may be repeated any number of times over the course of the degradation phase 234-and the shoe input 118 may be subject to any number of secondary processing phases 233a, 233b, ... 233n-until the endpoint threshold has been triggered. Turning to FIG. 9, the initial processing phase 232 of the degradation protocol 230 is described according to one example embodiment. The example shown and described with reference to FIG. 9 provides a non-limiting illustration of the various types of processing steps to which the shoe material 114 may be subject during the initial processing phase 232.

In general, the selection, order, and particular combination of processing steps that define the initial processing phase 232 may vary based on a variety of factors such as, *e.g.,* the amount (*i.e.,* volume and/or weight) of the shoe material 114, the type of shoes, components of shoes and/or materials that define the collected shoe material 114, the type of composting structure that defines the composting vessel 304 of the system 300 and/or the particular operating protocol in accordance with which the composting vessel 304 is operated, the specific composition of the compostable material 112 alongside which the shoe material 114 is to be degraded, etc. Accordingly, in various embodiments the initial processing phase 232 to which a first batch of shoe material 114a is subject may differ from that to which other batches of shoe material 114b, 114c, ... 114n are subject.

The processing steps to which the shoe material 114 is subject during the initial processing phase 232 can be similar (*e.g*., the same) as the types of processing steps to which the compostable material 112 is subject during the preparation phase 222 of the composting protocol 220. In some such embodiments, the compostable material 112 and shoe material 114 may be subject to such similar processing steps concurrently with one another and/or using the same equipment (*e.g*., using a common shredding machine).

As shown in FIG. 9, in various embodiments the initial processing phase 232 includes an optional sorting step 902. During the sorting step 902 the shoe material 114 can be sorted using any number of different systems and/or methods and may be sorted with any desired level of granularity. For example, in embodiments in which the shoe material 114 includes shoes in their entireties, the shoes are sorted based on, *e.g.,* shoe type (*e.g.,* athletic shoes, dress shoes, sandals, boots, etc.) and/or based on the overall material composition of the shoes (*e.g.*, leather, textile, etc.). In some such embodiments, the individual shoes are optionally then separated into respective shoe components (*e.g.*, sole, laces, upper, heel portion, etc.).

In various embodiments, shoe material 114 including shoe components may similarly sort the shoe components based on, *e.g.,* shoe component type and/or based on the overall material composition of the shoe components. In embodiments in which the shoe material 114 includes individual materials used in the construction of shoe, the shoe material 114 can be sorted based on material type (*e.g.,* textile, leather, etc.) and/or based on any other desired material characteristics (*e.g.,* density, etc.). Once the shoe material 114 has been sorted at step 902 with a sufficient desired degree of granularity, the sorted batches of shoe material 114 remain separate from one another during subsequent steps of the degradation protocol 230.

In various embodiments, the optional sorting of the collected shoe material 114 at step 902 is used to further increase the efficiency and/or effectiveness with which shoe material 114 is degraded. For example, despite both being made from biodegradable materials, a TPE sole of a shoe will experience a lesser degree of degradation than a woven, cotton-based lining of the same shoe when subject to the same composting conditions. Accordingly, the sorting of the shoe components into different batches, *e.g*., a batch of TPE soles and a batch of cotton-based lining) allows the degradation protocol 230 to tailor the selection, sequence, and/or duration of the other processing steps to which the batches of TPE soles and cotton-based lining will be subject during the remainder of the initial processing phase 232 (and/or during the secondary processing phases 233) to the distinct degradation needs of TPE material and cotton-based material.

In embodiments in which the collected shoe material 114 includes shoes and/or shoe components that are not entirety constructed from biodegradable materials (or other materials capable of being degraded by the method 200 and system 300), the sorting of the shoe components during step 902 may additionally, or alternatively, be used to discard such non-degradable portions of the shoe material 114, so that they do not form a part of the shoe input 118 that is subject to subsequent steps of the degradation protocol 230.

Among other factors, the rate at which a biodegradable material will degrade is dependent upon the surface area of the material. A larger surface area provides increased opportunity for bioactive materials to contact (and degrade) the material, which in turn increases the rate of degradation. Accordingly, to help expedite the degradation of shoe material 114, the shoe material 114 is subject to shredding (or is otherwise reduced into particles of smaller size) at step 904. During step 904, the shoe materials may be reduced to particles of any desired size. The size to which shoe material 114 is shred during step 904 may vary depending, *e.g.,* on the sizing of the teeth of shredder used to shred the shoe material 114. For example, in some embodiments, the shoe material 114 is shred using a shredder having a tooth spacing of between, *e.g.,* 5 cm and 30 cm, *e.g.,* between about 10 cm and 20 cm, etc.

The shoe material can be shred to particles of substantially uniform size, or to particles of differing sizes. For example, shredding some of the shoe materials to a larger size may advantageously help facilitate airflow through the more finely sized particles. The particle size to which the shoe material 114 is shred can be smaller, equal to, or larger than the particle size to which compostable material 112 is shred during the preparation phase 222 of the composting protocol 220. In addition to, or as an alternative to, shredding, the surface area of the shoe material 114 may be increased at step 904 by subjecting the shoe material 114 to other forms of mechanical stress, such as, *e.g.,* grinding, milling, compression, shear stress, perforation, etc.

In some embodiments, the shoe material 114 is not subject to shredding and/or other methods of increasing surface area at step 904. Instead, the shoe material 114 is optionally subject to shredding (and/or other methods of increasing surface area) during a secondary processing phase 233. Waiting to subj ect the shoe material 114 to shredding until the shoe material 114 has had sufficient exposure to composting conditions to attain a desired initial decrease in structural integrity may help reduce the effort required to shred the shoe material 114 and/or may allow the shoe material 114 to be shred to a smaller initial smaller particle size during the later secondary processing phase 233 using a similar amount of effort.

During step 906, the shoe material 114 is optionally subjected to one or more pre-treatments intended to remove and/or neutralize harmful (or otherwise unwanted) compounds that may be present in the shoe material 114. This pretreatment of step 906 can help minimize (*e.g*., prevent) the risk that harmful, or otherwise unwanted, compounds are released during degradation of the shoe material 114. For example, in embodiments in which the shoe material 114 includes leather materials (*e.g.,* suede), the pretreatment of step 906 can help neutralize the various chemicals (*e.g.,* chromium) to which the leather materials were exposed during the tanning process. Non-limiting examples of other treatments the shoe materials are subject to during the pretreatment step 906 include, *e.g*., hydrolysis, thermolysis, enzymatic exposure, etc.

Continuing to refer to FIG. 9, the shoe material 114 is exposed to one or more types of bioactive material at step 908. This bioactive material can include any number of, and combination of, organisms capable of chemically and/or physically degrading (*e.g*., via grinding, tearing, chewing, digesting, etc.) the shoe input. Non-limiting examples of the types of bioactive materials to which the shoe input is exposed at step 908 include: bacteria, fungi, protozoa, alga, insects, earthworms, etc. The bioactive material added to the shoe material 114 can be the same, or different, from the bioactive material that is added to the compostable material 112 during the preparation phase 222 of the composting protocol 220. To help ensure even exposure of the shoe material 114 to the bioactive material, the shoe material 114 is optionally mixed and or otherwise agitated to help homogenize the distribution of the bioactive material amongst the shoe material 114.

The bioactive material that is added to the shoe material 114 at step 908 can be obtained from any number of sources. In various embodiments, some (*e.g.,* all) of the bioactive material to which the shoe input is exposed at step 908 comprises bioactive material found in the run-off water collected during prior operation of the composting vessel (or other composting structure). As another example, the bioactive material used in step 908 may be provided in the form of mature compost collected during a prior operation of the composting vessel 304 and/or during operation of a different composting structure. The mature compost is optionally selected such that it is defined by a particle size that is substantially equal to, or less than, a sieve size (discussed in detail below) used during sieving of the shoe input 118 (*e.g.,* during a secondary processing phase 233 and/or during the optional sieving phase 236). Accordingly, in embodiments in which an endpoint threshold that triggers the conclusion of the degradation phase 234 is dependent on a measured weight and/or volume of the shoe input 118, the use of mature compost having sizes equal to, or less than, the sieve size allows the mature compost to be separated from the shoe input 118-thereby allowing for a more accurate reading of the weight and/or volume of the shoe input 118.

Continuing to refer to FIG. 9, in various embodiments the initial processing phase 232 includes a step 910 during which baseline information related to the shoe material is obtained. The baseline information collected at step 910 may include a variety of types of information that may be used to help assist with the degradation of the shoe material 114 and/or which may be used as part of a consumer-based business model associated with the degradation of the shoe material 114. For example, in embodiments in which the endpoint threshold which triggers the conclusion of the degradation phase 234 is based on monitoring a change in the weight and/or volume of the shoe material 114, information collected at step 910 may include an initial weight and/or volume of the shoe material 114, as well as, *e.g.,* a moisture level of the shoe material 114 at the time at which the weight and/or volume was measured and/or a pressure to which the shoe material 114 was subject when measuring a volume of the shoe material 114.

As another example, in various embodiments one or more of the parameters that define the conditions to which the shoe input is subject to during subsequent steps of the degradation protocol (*e.g.,* other processing steps to which the shoe material 114 may be subject during the initial processing phase 232 and/or secondary processing phases 233, selection of the endpoint threshold, etc.) may be tailored to the degradation requirements of a particular type of shoe material 114. Accordingly, in various embodiments the information collected at step 910 includes an identification of one or more characteristics representative of the particular type of shoes, shoe components and/or specific materials that define a particular batch of shoe material 114.

In embodiments in which the shoe material includes collected shoes (or portions thereof) including machine-readable identifiers (*e.g.,* in embodiments in which shoe are collected as part of a consumer-based business model), obtaining baseline information at step 910 may include obtaining the unique shoe identifiers associated with the machine-readable identifiers. In embodiments in which the container(s) 302 of the system 300 are provided with a machine-readable label, the baseline information obtained at step 910 is optionally associated with the machine-readable label of the respective one or more containers 302 into which the shoe material 114 is placed upon conclusion of the initial processing phase 232. Once the initial processing phase 232 has ended and the shoe input 118 has been placed into one or more containers 302, the filled containers 302 are loaded into the composting vessel 304. This loading of the containers 302 into the composting vessel 304 can occur prior to, concurrently with, and/or subsequent to the loading of the first batch of compostable input 116a into the composting vessel 304.

In some embodiments the containers 302 are loaded into a first region of the composting vessel 304, while the compostable input 116 is loaded into a second, different region of the composting vessel 304. Thus-in addition to the separation provided by the containers 302-the shoe input 118 and compostable input 116 are generally isolated from one another within the composting vessel 304 by nature of their relative placements therein. In other embodiments, the containers 302 are intermixed with the compostable input 116. In such embodiments, the containers 302 can be located underneath, amongst (*i.e.,* surrounded both above and below) and/or atop the compostable input 116. In various embodiments the containers 302 are optionally secured relative to the composting vessel 304 to further help facilitate the selective removal of the shoe input 118 from the compostable input 116 and/or to help minimize (*e.g*., prevent) the risk of the containers 302 being inadvertently removed with the compostable input 116 during unloading at the conclusion of a run 308.

Once the containers 302 and compostable input 116 have been loaded into the composting vessel 304, operation of an initial run 308a of the composting vessel 304 is commenced, thereby initiating the degradation phase 234 of the degradation protocol 230. As discussed above, the degradation phase 234 of the degradation protocol 230 defines the length of exposure to the composting conditions of which the shoe input 118 is exposed, such that the shoe material 114 is able to attain a desired degree and/or amount of degradation. As also discussed above, the degradation phase 234 of the degradation protocol 230 concludes upon the occurrence of an endpoint threshold. Accordingly, the length of the degradation phase 234 is defined by the selection of the endpoint threshold.

In some embodiments, the endpoint threshold corresponds to an event occurring at a fixed time following the initiation of the degradation protocol 230. In such embodiments, the degradation phase 234 is thus generally defined by a predetermined, known length of time. For example, in some embodiments the endpoint threshold corresponds to the expiration of a predetermined length of time as measured from the start of the initial run 308a of the composting vessel 304 at step 208 (*e.g.,* a period of 60 days, a period of 90 days, a period of 180 days, etc.). In the event that the predetermined time period selected as the endpoint threshold corresponds to a time during which the composting vessel 304 is being operated, the conclusion of the degradation phase 234 is optionally delayed to coincide with the conclusion of the in-process run 308 of the composting vessel 304.

As another example, in some embodiments the endpoint threshold corresponds to the completion of a predetermined number of runs 308 of the composting vessel 304 (*e.g.,* at the conclusion of ten runs of the composting vessel). As will be appreciated, in some embodiments the endpoint threshold may alternatively be manually set. According to yet other embodiments, the endpoint threshold is defined by a predetermined threshold value for one or more monitored parameters. Upon detection that the measured parameter(s) has reached this threshold value (*i.e.,* a reading that is either in excess or below the threshold value), the endpoint threshold is triggered. In the event that the threshold value is detected at a point in time during which the composting vessel 304 is being operated, the predetermined time period is optionally delayed to coincide with the conclusion of the in-process run of the composting vessel 304.

In yet other embodiments, the endpoint threshold is based on a predetermined time period/predetermined number of runs 308 of the composting vessel 304 in conjunction with a monitored parameter. For example, given the longer exposure to composting conditions required by the shoe input 118, it is to be expected that the shoe input 118 will not have attained a desired degree and/or amount of degradation during an early portion of the degradation phase 234. Accordingly, to avoid unnecessarily expending effort to obtain readings of the one or more measured parameters during this initial early portion of the degradation phase 234, the monitoring of one or more parameters may instead begin upon the expiration of a predetermined time/predetermined number of runs 308.

In various embodiments, the measured parameter on which the endpoint threshold is based is a weight and/or volume of the shoe input 118. As discussed above, the shoe input 118 may be exposed to moisture during the initial processing phase 232 and/or during the degradation phase 234. As will be appreciated, the measured weight and/or volume of the shoe input 118 may accordingly be subject to variation depending on the moisture content of the shoe input 118.

Additionally, the presence of moisture in the shoe input 118 may result in degraded portions of the shoe input (*i.e.,* portions of the shoe input 118 having a particle size that is equal to or less than a predetermined desired final size) being stuck to undegraded portions of the shoe input 118 and may thus result in the undegraded portions not properly being separated from the undegraded portions of the shoe input 118 during sieving.

Thus, to minimize (*e.g*., prevent) the moisture content of the shoe input 118 from affecting the measured weight and/or volume of the shoe input, the shoe input 118 is optionally subject to drying prior to being sieved and measured. In embodiments in which a moisture content of the shoe material 114 was obtained at step 910 during the initial processing phase 232, the shoe input 118 is dried to achieve a similar moisture level prior to measurement. Additionally, or alternatively, the shoe input 118 is optionally subject to direct and/or indirect agitation (*e.g.*, mixing, stirring, brushing, shredding, etc.) to assist with the separation of degraded shoe input 118 from undegraded portions of the shoe input 118 prior to the sieving of the shoe material 114.

In various embodiments, the endpoint threshold (*e.g*., a predetermined time period, a predetermined number of runs 308, a detected threshold value of a monitored parameter, etc.) that defines the conclusion of the degradation phase 234 of the degradation protocol 230 will vary for differing batches of shoe input 118. Non-limiting examples of variables that can affect this selection of an endpoint threshold for a particular batch of shoe input 118 include the specific structure of the composting vessel 304 and/or the specific operating protocol according to which the composting vessel 304 is operated, the initial weight and/or volume of the shoe input 118, the type of shoes, shoe components and/or materials from which the shoe material 114 is derived, etc. In such embodiments where different batches of shoe input 118 are assigned different predetermined endpoint thresholds, the correlation of an endpoint threshold and a specific batch of shoe input 118 is optionally assigned to the machine-readable label of the respective container 302 within which the shoe input 118 is contained. As representatively illustrated in FIG. 7B, in various embodiments different batches of shoe input 118a, 118b, ... 118n may thus be defined by degradation phases 234a, 234b, ... 234n having differing lengths.

As discussed above with reference to FIG. 8, the determination as to whether the shoe input 118 is subject to one or more additional secondary processing phases 233 during the course of the degradation phase 234 is based on the detection of a processing threshold (see, *e.g.,* step 810 of FIG. 8). Similar to the discussion above with reference to the endpoint threshold, the processing threshold may correspond to any one or more of at a fixed time following initiation of the degradation phase 234 (*e.g.,* after a predetermined number of runs 308 of the composting vessel 304 or upon the conclusion of a predetermined period of time), the detection of a monitored parameter value in excess (*i.e.,* above or below) a target level, and/or a manual input.

For example, in some embodiments the processing threshold corresponds to the conclusion of a run 308 of the composting vessel 304. Accordingly, as representatively illustrated by FIG. 3, in some embodiments the shoe input 118 is subject to a secondary processing phase 233 between each run 308a, 308b, ... 308n of the composting vessel 304. In other embodiments, the secondary processing phases 233 may be triggered based on the detection of a monitored parameter in excess of a target level. In the event that the processing threshold is triggered during a run 308 of the composting vessel 304, the start of the triggered secondary processing phase 233 is optionally delayed to coincide with the conclusion of the in-process run of the composting vessel 304. Alternatively the shoe input 118 may instead be temporarily removed from the composting vessel 304, and subsequently reintroduced into the composting vessel 304 upon completion of the triggered secondary processing phase 233. As will be appreciated, the ability to separate the shoe input 118 from the compostable input 116 quickly and easily provided by the containers 302 of the system advantageously allows the shoe input 118 to be subject to the triggered secondary processing phase 233 without significantly disrupting the exposure of the compostable input 116 to the composting conditions of the composting vessel 304.

In some embodiments, the processing threshold can correspond to more than one threshold. For example, the processing threshold may both subject the shoe input 118 to a secondary processing phase 233 at the conclusion of each run 308 of the composting vessel 304 (*i.e.,* in response to a first processing threshold corresponding to the conclusion of a run 308 of the composting vessel 304) and to an additional secondary processing phase 233 in response to the detection of a monitored parameter in excess of a target level (*e.g.,* in response to a second processing threshold corresponding to the detection of a shoe input 118 moisture level below a target level).

Similar to the discussion regarding the endpoint threshold above, the processing threshold(s) may vary for differing batches of shoe input 118 based on a number of different variables, including-but not limited to-the specific: types of shoes, shoe components, and/or types of material that define the shoe material 114. Accordingly, different batches of the shoe input 118 may be defined by differing processing threshold(s), and the corresponding correlation of the assigned processing threshold(s) with a specific batch of shoe input 118 can be assigned to the machine-readable label of the respective container 302 within which the shoe input 118 is contained. Similar to the discussion of the processing steps that define the initial processing phase 232 of the degradation protocol 230 (see, *e.g.,* FIG. 9), the processing steps to which the shoe input 118 is subject during the secondary processing phases 233 are also configured to help facilitate and expedite the breakdown of the shoe input 118. In this regard, the shoe input 118 may thus be subject to any number of one or more different types of processing steps during the one or more secondary processing phases 233.

For example, in some embodiments, one or more of the secondary processing phases 233 may include adding additional bioactive material to the shoe input 118. In other embodiments, the secondary processing phase(s) 233 may include agitation of the shoe input-directly (*e.g*., by stirring the shoe input 118) or indirectly (*e.g.*, by rotating the container 302)-so as to aerate and homogenize the shoe input 118. The degradation of the shoe input 118 may also be directly expedited by subjecting the shoe input 118 to mechanical stress (*e.g*., grinding, milling, shredding, etc.) during the secondary processing phase(s) 233.

The subjection of the shoe input to mechanical stress can be used to further decrease the structural integrity of the shoe (and thereby expedite degradation) and/or can be used to expedite degradation by decreasing the particle size of the shoe input (or by otherwise increasing the surface area of the shoe input 118 available for bioactive material activity). In various embodiments, the shoe input 118 is optionally subject to sieving as part of one or more of the secondary processing phases 233 to which it is subject. In such embodiments, the sieving may be performed in a manner similar to that described below with reference to the optional sieving phase 236. In embodiments in which the endpoint threshold is based on a measured weight and/or volume of the shoe input 118, one or more of the secondary processing phases 233 may include obtaining a weight and/or volume measure of the shoe input 118, as described above with reference to the endpoint threshold.

In some embodiments, some of the steps of a secondary processing phase 233 may be capable of being completed entirely within the composting vessel 304 (*e.g.,* indirect agitation of the shoe input 118, the addition of additional bioactive material to the shoe input 118, etc.). In some such embodiments, these additional processing step(s) can be performed while the shoe input 118 remains within the cavity 306 of the composting vessel 304 and subject to the composting conditions created therein. In other embodiments, the additional processing steps of a secondary processing phase 233 may require that the shoe input 118 be removed from the composting vessel 304. The specific processing parameters (*e.g*., the selection, sequence, duration, conditions, etc. of the one or more processing steps) that define the one or more secondary processing phases 233 to which the shoe material 114 may be subject as part of the degradation phase 234 may be based on any one or more of: manual input, a predetermined preprogrammed protocol and/or on a closed-loop system. The specific processing parameters that define the individual one or more secondary processing phases 233a, 233b, ... 233n to which the shoe input 118 is exposed can be the same, or can vary from one another. Similarly, the specific processing parameters that define the individual one or more secondary processing phases 233a, 233b, ... 233n may be the same, or may vary (in part, or in whole) from those that define the parameters of the initial processing phase 232 of the degradation protocol 230.

In some embodiments in which the specific processing parameters that define a secondary processing phase 233 are based in whole, or in part, on a preprogrammed protocol, the preprogrammed protocol is selected from a plurality of different available preprogrammed protocols. In such embodiments, batches of shoe material 114 that are defined by different characteristics (*e.g*., are subject to composting in composting vessels 304 having differing structures and/or which are operated in accordance to differing operating protocols; are defined by differing initial starting weights and/or volumes; are derived from different types of shoes, shoe components, and/or types of materials, etc.) are assigned different preprogrammed protocols. As will be appreciated, in such embodiments where different batches of shoe input 118 are assigned different preprogrammed protocols, the correlation of a specific preprogrammed protocol to a specific batch of shoe input 118 is optionally assigned to the machine-readable label of the respective container 302 within which the shoe input 118 is contained.

In embodiments utilizing a closed-loop system, the processing parameters selected to define a secondary processing phase 233 are based on one or more monitored variables. In such embodiments, readings (*e.g.* measurements) of one or more variables related to the degradation of the shoe input 118 are obtained at one or more points in time during the degradation phase 234, and used to identify and select the specific processing parameters that are to define an upcoming secondary processing phase 233a, 233b, ... 233n. Non-limiting examples of monitored parameters on which the selection of the specific processing parameters are based include: temperature of the shoe input 118, relative humidity of the shoe input 118, bioactive material activity (*e.g*., as determined by measuring nitrogen levels, enzyme levels, etc.), pH levels, air flow, oxygen levels, changes in weight and/or volume of the shoe input 118 as measured during a previous secondary processing phase 233, etc. In some embodiments, the same monitored parameter(s) may be used to both trigger a secondary processing phase 233 (*i.e.,* may define the processing threshold) and to define the processing parameters of the triggered secondary processing phase 233.

In some embodiments, a closed-loop system and predetermined protocol are used together to define the processing parameters of a secondary processing phase 233. For example, in some embodiments the specific processing parameters are initially based on a programmed protocol, and are subsequently (*e.g*., following the expiration of a predetermined period of time and/or the completion of a predetermined number of runs 308 of the composting vessel 304) based on one or more monitored parameters. In other embodiments, the processing parameters for each secondary processing phase 233 are defined by a selected default preprogrammed protocol, so long as one or more monitored parameters remain within a predefined acceptable range. In the event that one or more of the monitored variables exceeds a predetermined upper or lower limit, the default specific processing parameters are overridden, and the specific processing parameters are instead defined by an alternate predetermined selection of processing parameters.

The processing steps and composting conditions undergone by the shoe input 118 during the degradation protocol 230 subject the shoe material 114 to various stimuli that allow the shoe material 114 to degrade at a faster rate than would be possible if the shoe material 114 were disposed of via landfilling. The method 200 and system 300 described herein thus advantageously help minimize the volume of waste created by the disposal of shoes. Accordingly, in various embodiments, the degradation protocol 230 concludes following the degradation phase 234 having achieved a reduced waste footprint of the discarded shoe material 114.

However, as discussed above, one of the added benefits of utilizing composting in the degradation of biodegradable materials is that the activity of bioactive materials during the composting process results in biodegradable material being degraded into compost which can be used to return nutrients to soil. Accordingly, in various embodiments, the shoe input 118 is subject to an optional sieving phase 236 during the final step 212 of degradation protocol 230. During the sieving phase 236, the shoe input 118 is separated into particles of differing sizes (*e.g.,* by passing the particles through a sieve). Particles smaller that a first predetermined sieve size (*e.g.,* a size equal to or less than 15 mm, or equal to or less than 12 mm, or equal to or less than 10 mm) are collected for use as compost. In some embodiments, particles having a size ranging between the first predetermined sieve size and a larger, second predetermined sieve size (*e.g.,* a particle size of less than 50 mm, or less than 40 mm) are collected for use as bioactive material during a subsequent run of the method 200. Particles that are dimensioned larger than the second predetermined sieve size are disposed of in any desired fashion (*e.g*., by landfill, incineration, etc.). In some embodiments, the predetermined final desired size that is used to determine whether a desired degree and/or amount of degradation of the shoe material 114 has been achieved may correspond to one of the first predetermined sieve size or the second predetermined sieve size.

As will be appreciated, the final batch of compostable input 116n may be subject to a similar optional sieve step 226 of the composting protocol 220 during step 212. Prior batches of compostable input 116a, 116b, ... 116n-1 may also similarly be subject to the optional sieve step 226. The first predetermined sieve size and/or second predetermined sieve size according to which the compostable input 116 is separated during the sieve step 226 may be the same, or may vary from those used during the sieving phase 236 of the degradation protocol.

In some embodiments in which the shoe input 118 is subject to sieving (*e.g.*, during a secondary processing phase 233 and/or during an optional sieving phase 236), the portions of the shoe input 118 collected as compost may be mixed with portions of the compostable input 116 collected as compost. In other embodiments, the compost obtained from the shoe input 118 is collected (and optionally packaged) separately from the compost collected from the compostable input 116. Accordingly, in such embodiments, a collected batch of compost may be defined exclusively as being derived from the degradation of shoe material 114.

As noted previously, it will be appreciated by those skilled in the art that while the disclosure has been described above in connection with particular embodiments and examples, the disclosure is not necessarily so limited, and that numerous other embodiments, examples, uses, modifications and departures from the embodiments, examples and uses are intended to be encompassed by the claims attached hereto.

## Claims

1. A method for degrading footwear, the method comprising:
providing at least a portion of a shoe;
shredding the shoe into an initial amount of shoe input, the shoe input being defined by shredded particles of the shoe;
adding a bioactive material to the shoe input;
placing the shoe input into a container;
loading the container into a composting vessel;
operating the composting vessel for a period of time; and
removing the shoe input from the composting vessel after a conclusion of the period of time, wherein, following removal of the shoe input, at least about 30% of the shoe input has a particle size equal to or less than, about 12 mm.

2. The method of claim 1, wherein the shoe is shred in its entirety.

3. The method of claims 1 or 2, wherein the shoe is separated into components prior to shredding.

4. The method of claim 3, wherein only a portion of the separated shoe components are subject to shredding.

5. The method of claim 4, wherein only an upper of the shoe is subject to shredding.

6. The method of any of the preceding claims, wherein upon shredding, the shoe particles defining the shoe input have a size of about 25 mm or less.

7. The method of claim 6, wherein upon shredding, the shoe particles defining the shoe input have a size that is greater than about 10 mm.

8. The method of any of the preceding claims, wherein the shoe input is heated within the composting vessel to a temperature of between about 40 °C and 60 °C.

9. The method of claim any of the preceding claims, wherein the shoe input is maintained within the composting vessel for a period of at least one week.

10. The method of claim 8 further comprising:
adding a first batch of compostable input into the composting vessel,
wherein heating the shoe input to a temperature of between about 40 °C and 60 °C includes heating, at a first predetermined time, both the shoe input and the first batch of compostable input to a temperature of between about 40 °C and 60 °C.

11. The method of claim 10 further comprising:
removing the first batch of compostable input from the composting vessel; and
adding a second batch of compostable input into the composting vessel,
wherein the shoe input and second batch of compostable input are simultaneously present within the composting vessel.

12. The method of claim 11, wherein heating the shoe input to a temperature of between about 40 °C and 60 °C includes heating, at a second predetermined time, both the shoe input and the second batch of compostable input to a temperature of between about 40 °C and 60 °C.

13. The method of any of the preceding claims, wherein the shoe input is derived exclusively from one or more shoes, or components thereof.

14. The method of any of the preceding claims, wherein a volume of the cavity of the composting vessel is at least approximately 20 m³.

15. The method of any of the preceding claims, wherein the shoe material is contained within two or more containers within the cavity of the composting vessel.
